# EUROPÄISCHE PATENTSCHRIFT

(11) **EP 3 092 414 B1**
(45) Veröffentlichungstag und Bekanntmachung des Hinweises auf die Patenterteilung: **27.06.2018**
(21) Anmeldenummer: 14799347.1
(22) Anmeldetag: 14.11.2014
(51) Int. Cl.: F15B 1/10

(54) **DRUCKSPEICHER**
ACCUMULATOR
ACCUMULATEUR

(30) Priorität: 09.01.2014 DE 102014000358
(43) Veröffentlichungstag der Anmeldung: 16.11.2016
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE)
(74) Vertreter: Bartels und Partner, Patentanwälte
(86) Internationale Anmeldenummer: PCT/EP2014/003054
(87) Internationale Veröffentlichungsnummer: WO 2015/104034

(56) Entgegenhaltungen:
- EP-A1- 1 302 672
- DE-A1- 4 405 009
- US-A- 5 036 110
- US-B1- 6 186 178

## Beschreibung

Die Erfindung betrifft einen Druckspeicher mit den Merkmalen im Oberbegriff von Anspruch 1.

Druckspeicher dieser Gattung, sogenannte Membranspeicher, sind Stand der Technik. In Hydrauliksystemen können derartige Druckspeicher als Stoßdämpfer oder Pulsationsdämpfer Verwendung finden, um Druckstöße in einem Arbeitskreis abzudämpfen. Sie können ferner als Energiequelle für einen pumpenlosen Notkreislauf eingesetzt werden und eignen sich z. B. auch als hydraulische Druckfedern und dergleichen.

Beim Einsatz solcher Druckspeicher mit einem Arbeitsgas, wie Luft oder vorzugsweise Stickstoff, besteht ein Nachteil darin, dass die Membran in Abhängigkeit von der chemischen Zusammensetzung des Elastomers und der Betriebsdauer für das umschlossene Gas durchlässig wird. Der Stickstoff oder die Luft lösen sich zunächst im Elastomer und diffundieren unter Verdampfung in die Umgebung. Auf diese Weise verringert sich die im Speichersystem vorhandene Gasmenge und die Funktionstüchtigkeit nimmt rapide ab, wodurch das Speichersystem unbrauchbar wird und auch nicht wiederverwendbar ist, sondern entsorgt werden muss.

Um bei einer elastischen, hoch gasdichten Kunststoffmembran den Permeationswiderstand zu erhöhen ist es im Stand der Technik bekannt, einen mehrlagigen Aufbau der Membran vorzusehen, indem durch Aufrakeln, Aufsprühen, Aufgießen oder Streichen eine Schicht aus einem vernetzten Polysiloxan aufgetragen wird, vgl. DE 42 31 927 C2.

Bei einer weiteren, dem Stand der Technik entsprechenden Lösung, siehe DE 44 05 009 A1, sind für eine mehrlagige Membraneinheit eine erste und eine zweite Kunststoffmembran vorgesehen, wobei die erste Kunststoffmembran aus einem Elastomer besteht und die zweite Kunststoffmembran eine Polyesterfolie ist.

Die US 5 036 110 beschreibt einen Druckspeicher, mit einer ein bewegbares Trennelement zwischen Medienräumen bildenden Membran, die aus aneinanderliegenden Lagen unterschiedlicher Materialien aufgebaut ist, wobei zumindest eine Lage aus einer Filamente aufweisenden und mit einer gasdichten Imprägnierung versehenen Grundstruktur zwischen aus einem Elastomer bestehenden Lagen vorgesehen ist.

Weitere Druckspeicher gehen aus der US 6 186 178 B1, der DE 44 05 009 A1 und der EP 1 302 672 A1 hervor.

Ausgehend von diesem Stand der Technik stellt sich die Erfindung die Aufgabe, einen Druckspeicher zur Verfügung zu stellen, dessen Membrane sich durch einen weiter verbesserten, über lange Betriebszeiträume hinweg beständigen Permeationswiderstand auszeichnet.

Erfindungsgemäß ist diese Aufgabe durch einen Druckspeicher gelöst, der die Merkmale des Patentanspruches 1 in seiner Gesamtheit aufweist.

Demgemäß ist die Erfindung dadurch gekennzeichnet, dass die jeweilige, Filamente aufweisende Grundstruktur ein Gewebe, ein Gestrick, ein Gewirk oder ein Vlies aufweist.

Es ist ferner vorgesehen, dass die mehrlagige Membraneinheit zumindest eine Lage aus einer Filamente aufweisenden und mit einer gasdichten Imprägnierung versehenen Grundstruktur aufweist, die zwischen aus einem Elastomer bestehenden Lagen vorgesehen ist. Bei einer Filamente aufweisenden Struktur als Bestandteil einer mehrlagigen Membraneinheit ist die Gefahr, dass zur Erhöhung der Gasdichtheit auf einen Träger aufgetragene Schichten sich ablösen oder abplatzen, vermieden. Diese Gefahr besteht beim Stand der Technik aufgrund der Walkbewegungen, die die Membran im Betrieb ausführt und die im Laufe des Betriebs zu Rissbildung und in der Folge zum Ablösen oder Abplatzen führen können. Im Unterschied hierzu ergibt sich bei der erfindungsgemäß vorgesehenen gasdichten Imprägnierung einer Filamente aufweisenden Grundstruktur durch Eindringen der Imprägnierung und Umschließen von Filamenten an der Grundstruktur ein inniger, nicht lösbarer Verbund mit gleichbleibend hohem Permeationswiderstand.

Mit besonderem Vorteil kann ein aus Polyamid (PA 6.6) gebildetes Kunststoffgewebe vorgesehen sein.

In einer vorteilhaften Ausführungsform kann die Membran in Aufeinanderfolge eine Lage aus Nitrilkautschuk (NBR), eine imprägnierte Grundstruktur, eine weitere Lage aus Nitrilkautschuk (NBR), eine zweite imprägnierte Grundstruktur und eine dritte Lage aus Nitrilkautschuk (NBR) aufweisen. Bei zwei als Bestandteil der Membraneinheit vorgesehenen, gasdicht imprägnierten Grundstrukturen ist ein besonders hoher Permeationskoeffizient erreichbar.

Mit besonderem Vorteil kann zur Bildung der Imprägnierung an beiden Seiten der jeweiligen Grundstruktur eine Schicht aus Polyvinylacetat (PVAc) vorgesehen sein.

Mit besonderem Vorteil kann weiterhin zwischen der jeweiligen imprägnierten Grundstruktur und einer Lage aus Nitrilkautschuk (NBR) eine Barrierelage aus Ethylen-Vinylalkohol-Copolymer (EVOH) vorgesehen sein.

Bei einem besonders vorteilhaften Ausführungsbeispiel weist die Membran in Aufeinanderfolge eine Barrierelage aus Nitrilkautschuk (NBR) mit einer Haftgummierung, eine Lage aus Ethylen-Vinylalkohol-Copolymer (EVOH), eine imprägnierende Schicht aus Polyvinylacetat (PVAc), eine Grundstruktur, eine imprägnierende Schicht aus Polyvinylacetat (PVAc), eine Barrierelage aus Ethylen-Vinylalkohol-Copolymer (EVOH), eine Haftgummierungsschicht, eine Barrierelage aus Ethylen-Vinylalkohol-Copolymer (EVOH), eine imprägnierende Schicht aus Polyvinylacetat (PVAc), eine zweite Grundstruktur, eine imprägnierende Schicht aus Polyvinylacetat (PVAc), eine Barrierelage aus Ethylen-Vinylalkohol-Copolymer (EVCH) sowie eine Haftgummierung an einer Lage aus Nitrilkautschuk (NBR) auf.

Nachstehend ist die Erfindung anhand der Zeichnung näher erläutert. Es zeigen:
- Fig. 1: einen schematisierten Längsschnitt eines Ausführungsbeispieles des erfindungsgemäßen Druckspeichers;
- Fig. 1a: in stark vergrößerter und nicht maßstäblicher schematisierter Darstellung den in Fig. 1 markierten Teilbereich der Membran des Ausführungsbeispieles; und
- Fig. 2: eine der Fig. 1a entsprechende schematisierte Darstellung eines Teilbereiches der Membran eines abgewandelten Ausführungsbeispieles.

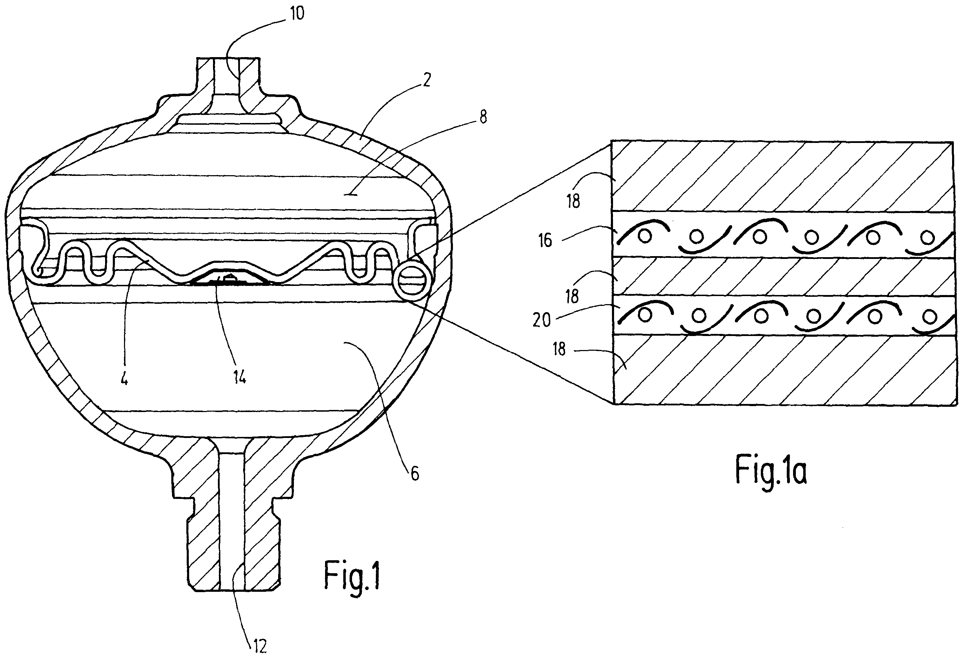

Die Fig. 1 zeigt einen Druckspeicher gemäß der Erfindung mit einem als Schweißkonstruktion ausgebildeten Speichergehäuse 2, in dem eine mehrlagig aufgebaute Membran 4 als bewegbares Trennelement eine Fluidseite 6 von einer Gasseite 8 trennt. Diese ist über einen Füllanschluss 10 mit einem Arbeitsgas, wie Stickstoff, befüllbar. An der Fluidseite 6 befindet sich ein Fluidanschluss 12 als Verbindung zu einem (nicht gezeigten) Hydrauliksystem. Im Zentralbereich der Membran 4 befindet sich an deren dem Fluidanschluss 12 zugewandten Seite ein Ventilteller 14, der bei völliger Entleerung an der Fluidseite 6 und entsprechend ausgezogener Membran 4 den Fluidanschluss 12 verschließt. Die Fig. 1 zeigt die Membran 4 in einer Lage, die sie bei vollständig entleertem, drucklosem Speicher einnimmt.

Die Fig. 1a verdeutlicht in schematisierter Darstellung den Lagenaufbau für ein Ausführungsbeispiel der Membran 4. Bei dem gezeigten Beispiel befindet sich eine gasdicht imprägnierte, Filamente aufweisende Grundstruktur 16 zwischen zwei aus einem Elastomer 18, wie NBR, gebildeten Lagen. Für die gasdichte Imprägnierung der Grundstruktur 16 ist an deren beiden Seiten eine Beschichtung aus Polyvinylacetat aufgebracht. Diese Grundierungsschicht ist in Fig. 1a nicht kenntlich gemacht. Die Grundstruktur 16 selbst ist aus einem Kunststoffgewebe aus Polyamid PA 6.6 gebildet. Die Membran 4 des Beispiels von Fig. 1a weist eine zweite gasdicht imprägnierte Grundstruktur 20 auf, die sich, wie die erste Grundstruktur 16 zwischen aus Elastomer 18 gebildeten Lagen befindet. Wie die erste Grundstruktur 16 ist auch die zweite Grundstruktur 20 durch ein Kunststoffgewebe aus Polyvinylacetat PA 6.6 gebildet, wobei ebenfalls an beiden Seiten eine grundierende Imprägnierung aus Polyvinylacetat vorgesehen ist. In der praktischen Ausführung weist die aus den angegebenen Lagen gebildete Membran 4 eine Gesamtstärke von 0,6 mm auf.

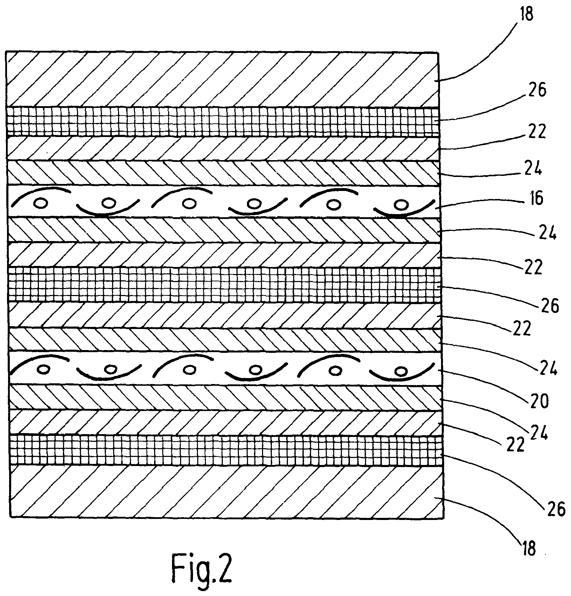

Bei dem Ausführungsbeispiel von Fig. 2 weist die Membran 4 zusätzlich zu den beim ersten Beispiel vorgesehenen Lagen an jeder Seite der imprägnierenden Grundierungsschicht von erster und zweiter Grundstruktur 16 und 20 jeweils eine Barrierelage 22 aus Ethylen-Vinylalkohol-Copolymer EVOH auf, die an der in Fig. 2 kenntlich gemachten, imprägnierenden Grundierungsschicht 24 an beiden Seiten von erster und zweiter Grundstruktur 16, 20 anliegt. Zwischen den beiden äußeren Lagen aus Elastomer 18 und der nächstfolgenden Barrierelage 22 befindet sich eine Haftgummierung 26, wie auch zwischen den zueinander benachbarten Barrierelagen 22 von erster und zweiter Grundstruktur 16, 20.

Wie bei dem ersten beschriebenen Beispiel ist die Membran 4 auch bei dem eine höhere Anzahl von Lagen aufweisenden Beispiel von Fig. 2 in einer Gesamtstärke von 0,6 mm ausbildbar. Beispielsweise kann die Stärke der außen liegenden Lagen aus Elastomer 18 und Haftgummierung 26 jeweils 0,15 mm betragen. Die Stärken von erster und zweiter Grundstruktur 16, 20 einschließlich Grundierungsschichten 24 und Barrierelagen 22 kann jeweils 0,13 mm betragen und die mittlere Haftgummierung 26 kann eine Schichtdicke von 0,04 mm aufweisen. Durch zwei Paare zusätzlicher Barrierelagen 22 aus Ethylen-Vinylalkohol-Copolymer EVOH, die beidseits neben erster und zweiter Grundstruktur 16, 20 angeordnet sind, ist höchste Gasdichtheit der Membran 4 erreichbar.

Die gasdichte Imprägnierung 24 ist in-situ in die Grundstruktur eingebracht, und die ansonsten üblichen Haft- und Verbindungsschichten, insbesondere in Form von Klebstoffschichten können in diesem Bereich vollständig entfallen. Die in die Grundstruktur eingetragene Imprägnierung steift insoweit auch die Gewebelage im Sinne einer Verstärkung aus.

## Patentansprüche

1. Druckspeicher, mit einer ein bewegbares Trennelement zwischen Medienräumen (6, 8) bildenden Membran (4), die aus aneinanderliegenden Lagen (16, 18, 20, 22, 24, 26) unterschiedlicher Materialien aufgebaut ist, wobei zumindest eine Lage aus einer Filamente aufweisenden und mit einer gasdichten Imprägnierung (24) versehenen Grundstruktur (16, 20) zwischen aus einem Elastomer bestehenden Lagen (18) vorgesehen ist, **dadurch gekennzeichnet, dass** die jeweilige, Filamente aufweisende Grundstruktur (16, 20) ein Gewebe, ein Gestrick, ein Gewirk oder ein Vlies aufweist.

2. Druckspeicher nach Anspruch 1, **dadurch gekennzeichnet, dass** mehr als eine Lage aus einer Filamente aufweisenden, imprägnierten Grundstruktur (16, 20) vorgesehen sind.

3. Druckspeicher nach Anspruch 1 oder 2, **dadurch gekennzeichnet, dass** zwischen den Grundstrukturen (16, 20) mindestens eine weitere Lage vorgesehen ist, von denen zumindest eine aus einem Elastomer (18, 26) besteht.

4. Druckspeicher nach einem der vorstehenden Ansprüche, **dadurch gekennzeichnet, dass** die imprägnierte Grundstruktur (16, 20) ein Kunststoffgewebe, vorzugsweise aus Polyamid (PA6.6), aufweist.

5. Druckspeicher nach einem der vorstehenden Ansprüche, **dadurch gekennzeichnet, dass** die Membran (4) in Aufeinanderfolge eine Lage (18) aus Nitrilkautschuk (NBR), eine imprägnierte Grundstruktur (16), eine weitere Lage (18) aus Nitrilkautschuk (NBR), eine zweite imprägnierte Grundstruktur (20) und eine dritte Lage (18) aus Nitrilkautschuk (NBR) aufweist.

6. Druckspeicher nach einem der vorstehenden Ansprüche, **dadurch gekennzeichnet, dass** zur Bildung der Imprägnierung an beiden Seiten der jeweiligen Grundstruktur (16, 20) eine Schicht (24) aus Polyvinylacetat (PVAc) vorgesehen ist.

7. Druckspeicher nach einem der vorstehenden Ansprüche, **dadurch gekennzeichnet, dass** zwischen der jeweiligen imprägnierten Grundstruktur (16, 20) und einer Lage (18, 26) aus Nitrilkautschuk (NBR) eine Barrierelage (22) aus Ethylen-Vinylalkohol-Copolymer (EVOH) vorgesehen ist.

8. Druckspeicher nach einem der vorstehenden Ansprüche, **dadurch gekennzeichnet, dass** die Membran (4) in Aufeinanderfolge eine Lage (18) aus Nitrilkautschuk (NBR) mit einer Haftgummierung (26), eine Barrierelage (22) aus Ethylen-Vinylalkohol-Copolymer (EVOH), eine imprägnierende Schicht (24) aus Polyvinylacetat (PVAc), eine Grundstruktur (16), eine imprägnierende Schicht (24) aus Polyvinylacetat (PVAc), eine Barrierelage (22) aus Ethylen-Vinylalkohol-Copolymer (EVOH), eine Haftgummierungsschicht (26), eine Barrierelage (22) aus Ethylen-Vinylalkohol-Copolymer (EVOH), eine imprägnierende Schicht (24) aus Polyvinylacetat (PVAc), eine zweite Grundstruktur (20), eine imprägnierende Schicht (24) aus Polyvinylacetat (PVAc), eine Barrierelage (22) aus Ethylen-Vinylalkohol-Copolymer (EVOH) sowie eine Haftgummierung (26) an einer Lage (18) aus Nitrilkautschuk (NBR) aufweist.

## Claims

1. A pressure accumulator having a membrane (4) forming a moveable separating element between media spaces (6, 8) and which is made of contiguous layers (16, 18, 20 22, 24, 26) of different materials, at least one layer of a base structure (16, 20) comprising filaments and provided with a gas-tight impregnation (24) being provided between layers (18) made of an elastomer, **characterised in that** the respective base structure (16, 20) comprising filaments comprises a textile, a knitted fabric, a crocheted fabric or a non-woven.

2. The pressure accumulator according to Claim 1, **characterised in that** more than one layer of an impregnated base structure (16, 20) comprising filaments are provided.

3. The pressure accumulator according to Claim 1 or 2, **characterised in that** at least one further layer is provided between the base structures (16, 20), at least one of which is made of an elastomer (18, 26).

4. The pressure accumulator according to any of the preceding claims, **characterised in that** the impregnated base structure (16, 20) comprises a synthetic textile, preferably made of polyamide (PA 6.6).

5. The pressure accumulator according to any of the preceding claims, **characterised in that** the membrane (4) comprises, in succession, a layer (18) of nitrile rubber (NBR), an impregnated base structure (16), a further layer (18) of nitrile rubber (NBR), a second impregnated base structure (20) and a third layer (18) of nitrile rubber (NBR).

6. The pressure accumulator according to any of the preceding claims, **characterised in that** a layer (24) of polyvinyl acetate (PVAc) is provided to form the impregnation on both sides of the respective base structure (16, 20).

7. The pressure accumulator according to any of the preceding claims, **characterised in that** a barrier layer (22) of ethylene vinyl alcohol copolymer (EVOH) is provided between the respective impregnated base structure (16, 20) and a layer (18, 26) of nitrile rubber (NBR).

8. The pressure accumulator according to any of the preceding claims, **characterised in that** the membrane (4) comprises, in succession, a layer (18) of nitrile rubber (NBR) with an adhesive coating (26), a barrier layer (22) of ethylene vinyl alcohol copolymer (EVOH), an impregnating layer (24) of polyvinyl acetate (PVAc), a base structure (16), an impregnating layer (24) of polyvinyl acetate (PVAc), a barrier layer (22) of ethylene vinyl alcohol copolymer (EVOH), an adhesive coating layer (26), a barrier layer (22) of ethylene vinyl alcohol copolymer (EVOH), an impregnating layer (24) of polyvinyl acetate (PVAc), a second base structure (20), an impregnating layer (24) of polyvinyl acetate (PVAc), a barrier layer (22) of ethylene vinyl alcohol copolymer (EVOH) and an adhesive coating (26) on a layer (18) of nitrile rubber (NBR).

## Revendications

1. Accumulateur de pression, comprenant une membrane (4), qui forme un élément de séparation mobile entre des espaces (6, 8) pour des fluides et qui est formé de couches (16, 18, 20, 22, 24, 26) juxtaposées de matériaux différents, au moins une couche en une structure (16, 20) de base, ayant des filaments et pourvue d'une imprégnation (24) étanche au gaz, étant prévue entre des couches (18) en un élastomère, **caractérisé en ce que** la structure (16, 20) de base ayant des filaments comporte un tissu, un tricot, un tissu à maille ou un non tissé.

2. Accumulateur de pression suivant la revendication 1, **caractérisé en ce qu'**il est prévu plus d'une couche en une structure (16, 20) de base imprégnée et ayant des filaments.

3. Accumulateur de pression suivant la revendication 1 ou 2, **caractérisé en ce qu'**entre les structures (16, 20) de base est prévue au moins une autre couche, dont l'une au moins est en un élastomère (18, 26).

4. Accumulateur de pression suivant l'une des revendications précédentes, **caractérisé en ce que** la structure (16, 20) de base imprégnée a un tissu en matière plastique, de préférence en polyamide (PA6.6).

5. Accumulateur de pression suivant l'une des revendications précédentes, **caractérisé en ce que** la membrane a, en succession, une couche (18) en caoutchouc nitrile (NBR), une structure (16) de base imprégnée, une autre couche (18) en caoutchouc nitrile (NBR), une deuxième structure (20) de base imprégnée et une troisième couche (18) en caoutchouc nitrile (NBR).

6. Accumulateur de pression suivant l'une des revendications précédentes, **caractérisé en ce que**, pour former l'imprégnation, il est prévu une couche (24) en poly (acétate de vinyle) (PVAc) sur les deux faces de la structure (16, 20) de base.

7. Accumulateur de pression suivant l'une des revendications précédentes, **caractérisé en ce qu'**entre la structure (16, 20) de base imprégnée et une couche (18, 26) en caoutchouc nitrile (NBR), est prévue une couche (22) formant barrière en copolymère d'éthylène et d'alcool vinylique (EVOH).

8. Accumulateur de pression suivant l'une des revendications précédentes, **caractérisé en ce que** la membrane (4) a, successivement, une couche (18) en caoutchouc nitrile (NBR) à gommage (26) adhésif, une couche (22) formant barrière en copolymère d'éthylène et d'alcool vinylique (EVOH), une couche (24) imprégnée en poly(acétate de vinyle)(PVAc), une structure (16) de base, une couche (24) d'imprégnation en poly(acétate de vinyle) (PVAc), une couche (22) formant barrière en copolymère d'éthylène et d'alcool vinylique (EVOH), une couche (26) de gommage adhésif, une couche (22) formant barrière en copolymère d'éthylène et d'alcool vinylique (EVOH), une couche (24) d'imprégnation en Poly(acétate de vinyle) (PVAc), une deuxième structure (20) de base, une couche (24) d'imprégnation en poly(acétate de vinyle) (PVAc), une couche (22) formant barrière en copolymère d'éthylène et d'alcool vinylique (EVOH) ainsi qu'un gommage (26) adhésif sur une couche (18) en caoutchouc nitrile (NBR).
